# EUROPEAN PATENT SPECIFICATION

(11) **EP 0 834 101 B1**
(45) Date of publication and mention of the grant of the patent: **12.09.2001**
(21) Application number: 96918766.5
(22) Date of filing: 20.06.1996
(51) Int. Cl.: G03G 21/04, H04N 1/00, G06K 9/78

(54) **DATA SECURITY SYSTEM AND METHOD**
SYSTEM UND VERFAHREN ZUR SICHERUNG VON DATEN
SYSTEME DE PROTECTION DE DONNEES ET METHODE CORRESPONDANTE

(30) Priority: 22.06.1995 GB 9512691
(43) Date of publication of application: 08.04.1998
(73) Proprietor: GESTETNER MANAGEMENT LIMITED, London W1M 2AP (GB)
(72) Inventor: BRAMALL, Roy, Northants, NN13 5GF (GB)
(74) Representative: Barlow, Roy James
(86) International application number: GB9601471
(87) International publication number: WO9701132

(56) References cited:
- EP-A- 0 542 462
- EP-A- 0 654 934
- US-A- 4 588 286

## Description

The present invention relates to a security system and method for data handling, for example to be applied to a photocopier, a facsimile transmitter/receiver, or a PC or network computer system.

In various security sensitive areas, for example in military procurement agencies, or in banks and professional legal offices, or in diplomatic offices, there is a risk of documents being copied illicitly, by persons with or without authorization, and hence leading to leakage of data. Similarly, there is a risk of images being transmitted by facsimile machines without authorization. It is a problem to control such unauthorised handling of data, and hitherto no effective solution has been found.

Equipment is available for monitoring the use of data handling equipment such as photocopiers, for example where several users of a photocopier may each be issued with an authorization card permitting them to make a given number of copies, and the system then audits the use of the photocopier to bar a particular card once the user has consumed his or her available authorised number of copies. Likewise, certain facsimile machines may have the option of requiring a user to enter a password or code before being able to despatch information. Furthermore several computer systems, both PC and network-based, use password-authorised access to a user.

Such systems are useful in that the photocopier and/or facsimile equipment just described enables some form of audit to be kept on the volume of use of the equipment. Furthermore, the password-authorised access to a computer system ensures that only those with a "need-to-use" are given access to the computer, and it is possible for there to be various levels of authorised user such that many users may be given access to read off the data on the computer but only a few may be given access to change the data.

In an attempt to prevent unauthorised leakage of information which may be transmitted by, or stored in, data handling equipment, the present invention proposes to log not only the identity of the user but also the data which that particular user has handled.

Accordingly, one aspect of the present invention provides a data security system comprising:- image data handling equipment; user identification means for activation in a manner indicative of the unique identity of a pre-authorised user of the equipment; image data receiving means connected to receive the image data of an entire image being handled by the equipment; and data storage means connected to receive the image data from said image data receiving means and user identification data from said user identification means for storing the information in reproducible form, wherein said data storage means include means for deriving an image data characteristic of each image handled by the image data handling equipment, and means for comparing the said image data characteristic of two successive images for identifying repetition of the same image information in two successive cycles, characterized in that said image data characteristic is the bit count of the digital image information; and in that means are provided for ensuring storing the image data of the first of said two successive images but not the second of said two successive images where the first entire image and the entire next successive image have said image data characteristics indicative of a repeat of the same image.

A second aspect of the invention provides a method of preserving security of data, comprising:- recording the identity of the user of image data handling equipment; storing the image data of an entire image processed by said image data handling equipment, in association with the data indicative of the identity of the user; generating an image data characteristic of each image processed by said image data handling equipment; comparing the values of said image data characteristic of any two entire successive images processed by the image data handling equipment; characterized in that the image data characteristic is the bit count of the image data to be stored; and in that, upon detecting identity of two successive said entire images being processed, the digital image data of the first said image is stored and the image data of the second said image is disregarded but its said image data characteristic is used for comparison with that of yet a further subsequent image.

In order that the present invention may more readily be understood the following description is given, merely by way of example, with reference to the accompanying drawings, in which:-
FIGURE 1 is a schematic view of a photocopier incorporating a data security system in accordance with the present invention;
FIGURE 2 is a detailed schematic block diagram of the security audit device (SAD) incorporated in the photocopier of Figure 1;
FIGURE 3 is a schematic view of the audit interrogation equipment to be used with the security audit device of Figure 2.
FIGURE 4 is a logic diagram of the process of writing on the CD ROM an image data file tagged with user identification data and image identification data (bit code tag);
FIGURE 5 is a logic diagram showing retrieval of archived image files from the CD ROM in response to data specific to a known user under investigation; and
FIGURE 6 is a logic diagram of an image file retrieval process based on data which is specific to a particular image under investigation.

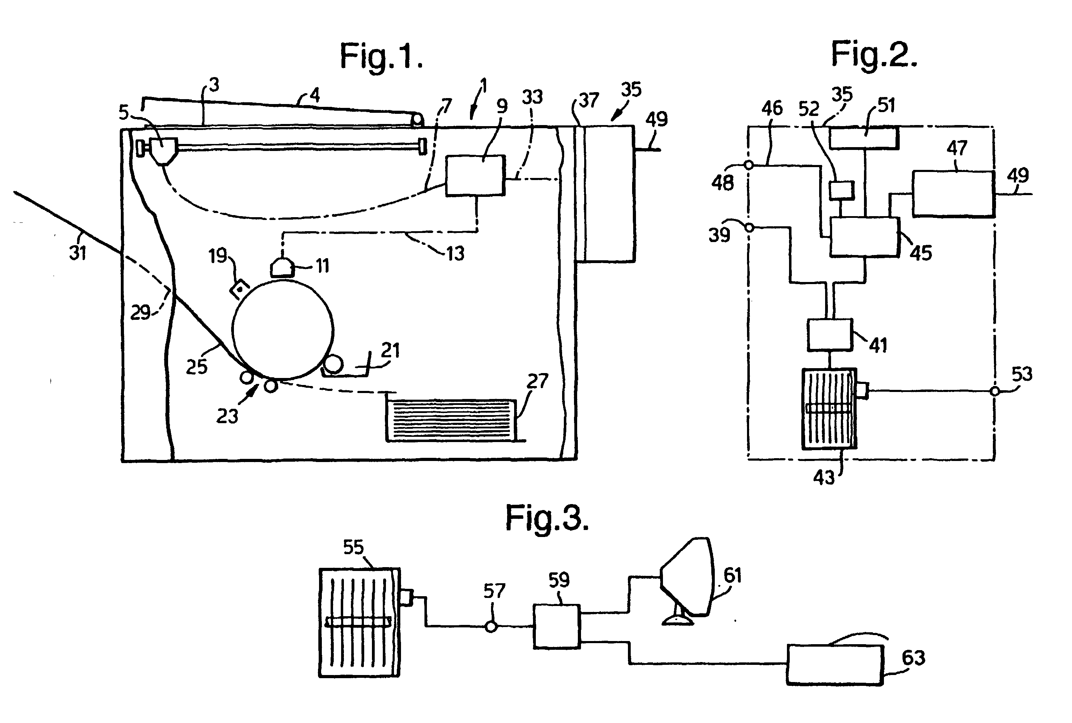

Figure 1 shows a photocopier 1 in which the image on a document 3 is scanned by an electro-optical scanning head 5 whose output signal is transmitted along a flexible line 7 to an image handling unit 9. At the image handling unit 9, the digital data from the travelling scanning head 5 may be processed so as to effect magnification or reduction when the image is printed at a print head 11, or can be processed in some other way (such as to change the contrast of the printed image). The image is transferred from the image handling unit 9 to the print head 11 along a transmission line 13.

In the conventional manner, the image printed at the print head 11 is transferred in the form of a latent electrostatic image to the electrically charged surface 15 of a photoconductor drum 17 which has been charged by a charging unit 19. The image is then developed by application of toner to the image areas by means of a developer unit 21 so that the thus developed toner image can be transferred at an image transfer station 23 to a sheet 25 coming from a sheet feeder 27 and passing along a sheet path 29 to a delivery tray 31. This cycle of operations on a photoconductor surface passing the charging unit 19, the electrostatic latent image formation unit (print head 11), the developer 21 and the image transfer station 23 is common to most if not all conventional photocopiers, including those having a purely optical transmission of the image from the scanning head 5 to the image transfer station 23 and delivery of the printed sheet at tray 31.

In accordance with the present invention a second image transmission line 33 is connected to a security audit device (SAD) 35 which is removably mounted on the body of the photocopier 1 by means of an interface 37.

The security audit device is shown in more detail in Figure 2 as comprising an inlet connector 39 carrying digital data representative of the images being copied by the photocopier 1. This data is transferred to a data merging unit 41 which then passes its output onward to a storage unit 43 in this case in the form of a write-capable of CD record/play unit.

Another input to the data merging unit 41 comes from a user data reader encoder 45 which receives signals from a card reader 47 using either a swipe card system or a conventional credit card-style magnetic card reader. The card, shown at 49, may be replaced by any other form of personal hardware to identify the user.

Simultaneously with the acquisition of a signal read from the card 49 by the reader 47, the user data encoding unit also receives signals from a keyboard 51 where the user of the image handling unit must enter appropriate personal identification data such as a personal identification number (PIN) or a password. Furthermore the data signal at the keyboard 51 may include document-specific data, for example a document identification code.

The data thus generated by the encoder 45 is merged at 41 with the data representative of the image being handled, and is then stored by the CD ROM record/play unit 43. The CD ROM unit 43 may be replaced by any other suitable form of storage unit capable of handling large quantities of data.

The user identification data encoder 45 also includes means for checking the information input at the keyboard 51 against the information read off the card 49 to verify the user's authority to access the copier 1. A successful verification will result in an "authorise copier" signal on an output line 46 from the encoder 45 to be passed back to the copier 1 via a copier enable port 48.

The write-capable CD ROM system is particularly convenient as it is known that such a system is already available for image storage and reproduction so as to be capable of storing over 2000 full colour images on a single 5.25" CD ROM disc, and the number of monochrome images available will be considerably greater.

In order to expand the memory capacity of the storage unit 43 it is envisaged that the CD ROM record/play unit will include a cassette of several CDs which can be filled sequentially. Equally, they may be played back sequentially in the case where the security audit device includes the play port 53.

The data stored on the CD ROM discs in the record/play unit 43 may be subjected to compression/encryption techniques in order to expand the quantity of data which can be stored in this way. The encryption code for the CD ROM record/play unit will be held on a an EP ROM within the security audit device 35, using a code reference selected by the user authority of the data handling system.

In the context of the security audit device 35 applied to a photocopier, there are certain measures which can be taken in order to avoid unnecessary cluttering of the data store such as the CD ROM disc.

For example, on a multi-copy print run there is need for only one of the images to be stored so it would be acceptable for the first copied image to be stored along with the user identification data, on the assumption that the same image has been copied in each of the many cycles of a multi-copy run. In order to ensure this is the case, other measures (to prevent image substitution) may be taken such as recording of a "platen open" signal arising during a multi-copy run (indicating that the platen has been opened to permit the first document to be replaced by a further document which would otherwise not be recorded in the data store), or by the provision of some form of image recognition unit which will either (i) register an "all-black" image indicative of removal of one document and replacement by another, or (ii) record, with possible compression, the digital data of the first document and then identify repetition by a recognition unit to be described below, or (iii) register the substitution of a first document by a second (or even simple movement of the original during a multi-copy print run). Such a system will effectively provide verification that the image is always the same during a multi-copy run, thereby legitimately permitting avoidance of the need to store each and every image copied. An alarm may be given, or recorded, in the case of such an image substitution.

As mentioned above, it is possible for some form of image recognition circuit to be incorporated in the security audit device to provide both compression and encryption possibilities.

In its application to the task of recognising a repeated image, the security audit device will rely on an incoming digital data signal, and will record the first image, possibly with compression, but also has a circuit which will count the number of bits in that first image. This image and bit count are stored in a temporary store.

The next image is then recorded and the bit-counting circuit again makes a count of the number of bits in that image.

A comparator then compares the stored number of bits in the first storage (in the temporary store) with the counted number of bits in the next successive image, and if the bit count values are within a predetermined tolerance range it can be assumed that the first and second images are of the same original and the recorded second image will then be cancelled, but the bit count of the second image may be stored on the CD ROM. Following this the temporary store will be cleared so the bit count of the third image can be stored there.

This process continues until the result of comparing the bit counts of the first image and the nth image is outside the predetermined tolerance range, following which the first image will be transmitted to the CD ROM, together with its bit count, for archiving and the nth image will be stored in the temporary store to be compared with the (n+1)th image, again to identify identicality of image.

As a further advantage of this bit count image comparison technique, it is envisaged that as each image is stored on the CD ROM the "bit count" for that image will also be stored. It will then be possible for the CD ROM to be accessed during subsequent interrogation, to be described later in connection with Figure 3, so that the disc contents can be searched in order to identify all images where the bit count stored resembles, within the predetermined tolerance range, the bit count of a particular image to be traced. This will enable the interrogation process to allow any given image to be digitized and for the contents of the CD ROM to be accessed to identify any image whose bit count is consistent with it being the same image as the one being searched for. The various images identified by this bit count comparison technique can then be investigated individually, either by an appropriate digital circuit or by visual examination by an operator, to discover whether an original bearing that particular image has ever been scanned before during the period covered by that particular disc in the SAD, and if so by whom and on what date. This implies the storage of (a) the digital data (possibly compressed) of the image, (b) the bit count of the image, (c) the date and time of scanning of the image, and (d) the identity of the operator instructing the copying or fax transmission of that particular image.

This retrieval process to identify handling of a particular image may be facilitated in the case where a document-specific reference is input on the keyboard 51 as described above.

The security audit device 35 is provided with an output port 53 which allows a disc in the CD ROM record/play device 43 to be interrogated by plugging a suitably designed monitor and/or printer into the port 53.

An alternative possibility is for the cassette of CD ROM discs to be removed from the unit 43 and to be placed in a CD ROM player 55 (Figure 3) for interrogation purposes. In other words, it is not necessary for the device 43 to be capable of both recording and playing, but it must at least be capable of recording the data received from the data merging unit 41.

The CD ROM in question is one which cannot be corrupted by being subjected to a strong magnetic field, so that both when in the CD ROM port of the SAD and during transit to a subsequent interrogation operation the CD will maintain its data intact. This gives a distinct advantage over the use of magnetic tape as the storage medium.

It is also envisaged that both the SAD and any carrier to transport the CD ROM from the SAD to the interrogation station will be tamper-evident, in the sense that it will not be possible for anyone to gain unauthorised access to the CD without it being evident that some attempt has been made, for example by mechanical interference such as by prising open the CD ROM container.

In the Figure 3 installation, the CD ROM player 55 has its outlet or play port 57 connected to the input of a control unit 59 such as a PC which can supply a monitor screen 61 and/or a printer 63 to reproduce the image either in instantaneously observable form on the monitor 61 or in hard copy print form at the printer 63.

In the Figure 3 embodiment where the cassette is removed from the security audit device 35 and placed in a CD ROM player 55, the PC 59 serving as the control unit will also enforce password protection screening to ensure that the same code which was encrypted onto the EP ROM to control the encryption code for the CD ROM in the security audit device 35 has been entered on the PC 59 before viewing of the data on the monitor screen 61 or before printing on the printer 63 can be carried out. In other words, only specifically identified personnel, e.g. authorised security personnel will be able to access the information stored on the CD ROM.

Image data and operator identification data will be simultaneously shown on the screen in order to allow a security check to be made. If observation on the screen 61 suggests that a risk situation exists, a print can then be made using the printer 63, to provide a hard copy for further investigation.

Over a period of time the CD ROM discs can be archived in a secure storage area, thereby replacing any manual chronologically based hard copy system which may have been enforced in the past in order to provide some security of data.

Although the CD ROM can only be written once in the SAD, it is possible for the data on that CD ROM to be read several times, so that the CD ROM disc from an SAD provides automatic archiving.

An example will now be given of the use of the security system shown in Figures 1 to 3.

When a user wishes to make a copy using the photocopier 1 of Figure 1 he or she must first of all enter his personal identification card 49 in the card reader 47 (for example by swiping the card through in the case of a swipe card reader or by inserting his card in the case of a captive credit card reader), and he or she must also enter his or her password or PIN on the keyboard 51.

The user identification data encoder 45 then compares the PIN or password with the data read from the card 49 and generates a "copy authorization" signal on the transmission line 46 to the "copier enable" port 48. Such a signal at the port 48 is necessary in order for the copier to be capable of then scanning the image on the platen when the "copy" button of the photocopier is pressed.

Each time the platen is opened and a new original 3 is inserted, the user identification data encoder 45 will prepare user identification tag signals comprising firstly the identification of the owner of the card 49 and secondly the date and time indicated by a clock unit 52. This data is then transmitted to the data merging unit 41 together with the image data (and optionally the bit count of that image) of the first original received from the image data input port 39 of the security audit device 35, and a data block comprising the digital image data of the first image and the date/time and user identification information is then stored on the CD ROM disc or other storage means.

Although it could be a requirement that the user repeats the card reading operation and the PIN/password entry operation for each new original or series of originals in a multi-original run using an automatic document feeder (ADF), it is envisaged that the user may be required to clear his or her identification data by an appropriate control on the photocopier, and that he or she will do so before leaving the copier available for the next user.

In order to keep an accurate check on just who has instructed each image processing operation of the equipment protected by the SAD, there will be a time-responsive call for re-inputting of identity data during operation of the device. This can, for example be triggered by the SAD. In other words, when a particular operator has instructed the copying of a page or the facsimile transmission of that page, and after a predetermined time interval of a few seconds a subsequent page has not been copied or transmitted, the identification data will be regarded as time-expired and fresh identity input will be needed before the next sheet can be transmitted. This will both encourage users to speed up use of the image data handling equipment and also ensure that it is unlikely for the identity of one particular user to be tagged against the image processed by a different user.

When a particular user has finished with the photocopier and has cleared his or her identification data (and removed his or her ID card in the case of the credit card type of reader), the next user will need to go through the above-mentioned sequence of operations in order to produce one or more photocopies.

At any stage security personnel may carry out a security audit by either accessing the data output port 53 of the storage unit 43 when this is in the form of a CD ROM record/play unit, or by removing the cassette of CD ROM discs and inserting them in the CD ROM play unit 55 of Figure 3. The interrogation operation will then be much the same regardless of which of the two systems is available, in that the security person will firstly need to enter the appropriate encryption code data in order to be able to access the information from the CD ROM play operation either on the screen 61 or, if necessary, on the printer 63. In the control unit 59 (Figure 3) this encryption code data will be checked against the encryption code data previously stored via the EP ROM, to verify the authorization of the user of the audit facility (Figure 3). As indicated above, the printer 63 will normally only be used when observation on the screen 61 indicates that a security risk has been detected.

The security audit device 35 may be supplied separately from the photocopier but is intended for use with a copier which is SAD-compatible (i.e. has an interface 37 for attachment of the SAD). Not only can the image processing equipment such as a facsimile machine or photocopier be built with its own SAD already incorporated, it is possible for an existing such image data handling machine in the field to be recalled and rebuilt to incorporate the interface 37 for an appropriate SAD.

Another important consideration from the point of view of security of the information recorded on the CD ROM is that it is envisaged that the data being recorded will be encrypted, with or without compression, and that the encryption algorithm will be specific to that particular SAD. In order to interpret the information at the audit interrogation stage it will be necessary to know the encryption code of the SAD in question and, given a large number of available encryption codes, it is going to be less likely for an unauthorised interceptor of the CD ROM to be able to extract the stored data from the CD ROM because the encryption code would ideally not be identifiable from the CD ROM itself.

The "copy enable" port on the photocopier will be linked to the image data output port of the photocopier in such a way that when there is no SAD 35 connected to the photocopier there will be no requirement for a "photocopy authorise" signal to be received before the photocopier can be used.

The security audit devices 35 are thus able to be shared between a larger number of photocopiers with a view to employing them in selected areas, or at selected times, at which the risk of breach of security is considered to be heightened.

Thus far the specific example given has been related to the use of a photocopier with an SAD.

The same or a similar system can be used in conjunction with a facsimile transmit/receive unit in that the facsimile transmit operation may only be authorised when matching PIN/password data and a user identification card have been entered in a security audit device (SAD) associated with the facsimile machine. The SAD will be designed to acquire the identification of the addressee of a Fax transmission as well as the user identification data and the time/date information and the image data taken from the scanner of the facsimile transmitter.

A similar use for the SAD can be found during facsimile receiving where the input of user identification data from an ID card and PIN/password keying will be necessary before a received facsimile can be printed and delivered upon receipt.

The manner in which the facsimile transmitter/receiver and the SAD are associated with one another will be evident from the above description and illustration of the photocopier/SAD combination so no separate illustration or further description is necessary.

As indicated above, a further application for the security audit system of the present invention is in the context of a PC or a networked computer work station where the entering of user identification data by at least password or PIN identification, and the time of use information as well as the accessed data information (referred to herein as "image data") will be stored by the SAD.

With suitable software, the possibility also exists of being able to encode activating instructions for the SAD so that low security classification information may be accessed without storing for audit and using up valuable storage space on the SAD, whereas higher classification equipment may automatically activate the SAD for user identification.

Existing password-protected computer installations provide a measure of protection in ensuring that someone who does not have a compatible password or PIN cannot access the computer. However, leaks are often thought to be attributable to personnel having a right of access to the information but who are misusing the trust imposed in them by leaking a hard copy of or by facsimile transmission of, the protected data. Using a security audit system such as is contemplated in accordance with the present invention allows a later investigation to be made of the data which was used; and the identification of the user in question, and if appropriate an indication of the date and time when the information was handled. This will enable subsequent questioning of any personnel suspected to have been involved in a breach of security, and the mere fact that this identification is available should serve to deter any authorised user contemplating leaking information from the secure area protected by the system.

In order to ensure that anyone contemplating leaking information does not disable the SAD, it is envisaged that it will be incorporated within a secure casing which will be resistant to mechanical andlor chemical attack and may even be alarmed in order to ensure that any abuse of the SAD will alert the security personnel to investigate the particular installation on which the alarm is annunciating.

One particularly appropriate form of data handling equipment for the application of this invention is the device known as a multi-functional product which provides a combination of the functions of a photocopier, a facsimile transmitter/receiver, and a printer.

As indicated above, it is envisaged that the storing of data on the CD ROM will involve in some way tagging the images with a readily recognisable characteristic which might enable all possible transactions on a particular image to be traced later. As mentioned above, one possibility would be for the bit count of the digital image data to be stored with the image itself so that simply accessing all images having a particular bit count, or falling within a particular bit count range, can serve to identify all possible transactions on the same image as one which is being traced for security audit purposes.

It is equally envisaged that the program for storing data on the CD ROM will facilitate accessing the data by date/time of recording, and by identity of the operator carrying out the recording, as well as by the above mentioned possibility of listing all transactions with a given image characteristic.

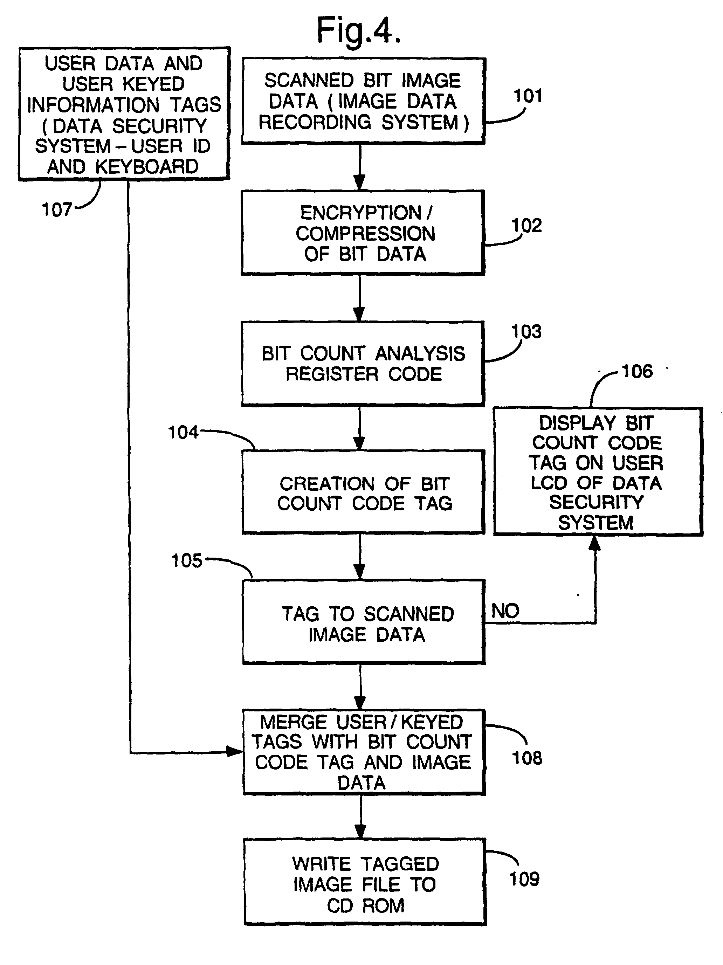

Figure 4 illustrates a logic diagram of the operation of the security audit device to write image and user data onto the CD ROM, as will normally occur during operation of the photocopier or other data handling equipment protected by the SAD.

In step 101 a scanned bit image data signal is derived, for example from inlet connector 39 of Figure 2. This signal is then subject to encryption and/or compression at step 102 and the resulting bit count analysis register code is derived at step 103. At step 104 this code is used to create a bit count code tag and the tag is applied to the scanned image data at step 105. Thus, in association with the. scanned image data, there is a tag which is representative of the bit count code tag from step 104. This bit count code tag may be displayed on the user liquid crystal display (LCD) of the SAD at step 106, and this particular display can then be recorded and used in the retrieval process when the original is known and the audit requires recognition of all instants when that original image was processed, regardless of by whom. This step is not essential to the tagged image data writing process displayed on Figure 4, but is shown for completeness. Progression from step 105 to display step 106 is triggered by a command on the SAD keyboard 51 (Fig. 1).

In normal operation of the SAD, user data is derived as step 107 from both (i) the user ID card reader and (ii) information tags which are keyed in by the user on the keyboard 51. This user/specific data is then merged at step 108 with the bit count code tag and image data from step 105 and the merged information is written on the CD ROM at step 109 as a tagged image file. In other words, the file as written on the CD ROM includes the image data, the bit count code tag (from step 104), and the user/specific data from step 107. This is stored in a permanent manner on the CD ROM and can be accessed later for audit purposes, preferably using a separate PC having a CD ROM port into which the CD ROM has been loaded after removal from SAD.

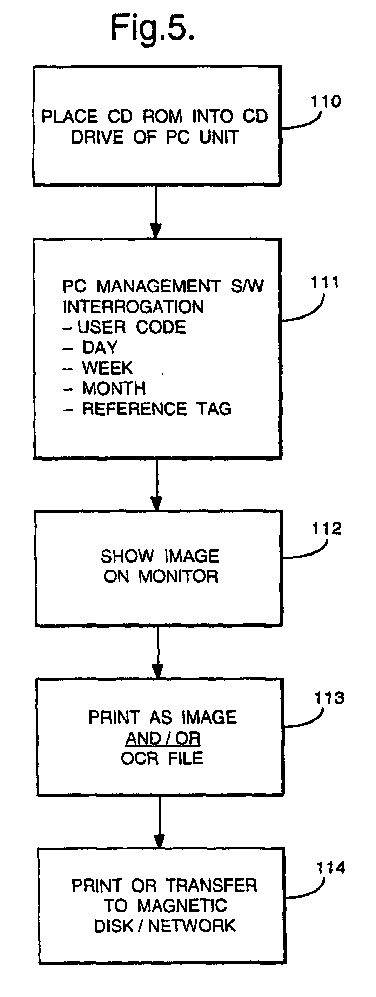

Figure 5 shows a logic diagram of the retrieval process using data tags which are defined by the user carrying out the audit operation.

At step 110 the CD ROM is placed into the CD drive of the PC, and then at step 111 the user inputs data in response to interrogation by the PC Management Software. This data will include the user code of the user whose use of the data handling equipment is being investigated, the day, the week and the month of the suspected incident of use to be investigated (or altematively the start and end of a period under investigation), and a reference tag of the image data (if known).

At step 112 the PC Management Software will then display any image which has been stored, with the user code of the user under investigation, on the appropriate date input at step 111, displaying this on the monitor of the PC. At step 113 this data can then be retrieved either for printing as a complete image, or as an optical character recognition (OCR) file on the PC for subsequent data processing, or both.

At step 114, the thus retrieved image can either be printed or transferred to a magnetic disc or to a network and is once again outside the secure confines of the SAD.

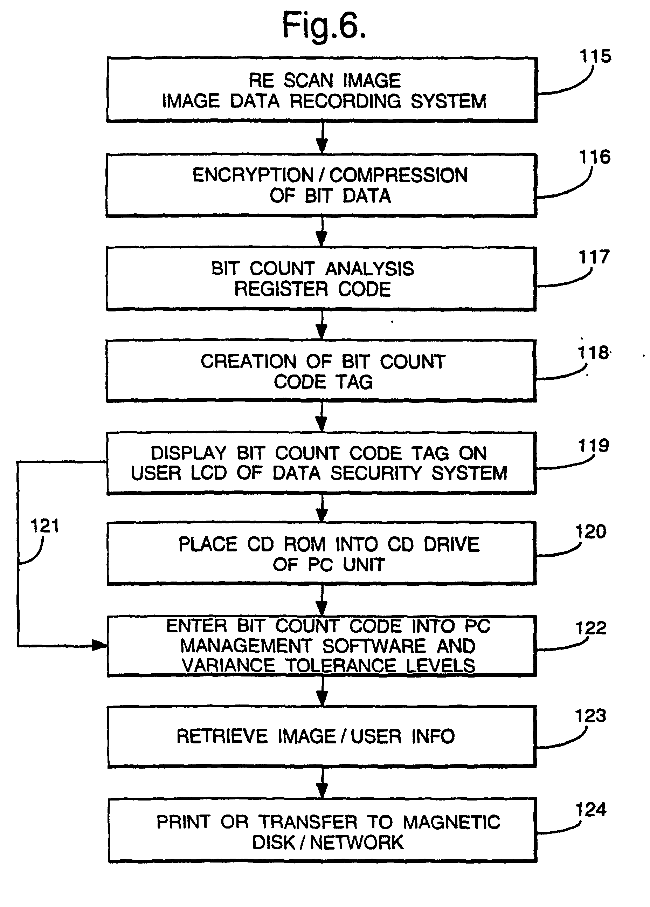

The above retrieval process assumes that the identity of the user under investigation is known. It may be, however, that the nature of the image under investigation is known and that the identity of the user is the unknown factor. Then, the retrieval process is as defined by the logic diagram shown in Figure 6 where steps 115 to 118 are repeats of steps 101 to 104 of Figure 4 and will result in the display of the bit count code tag on the user LCD of the SAD at step 119 (equivalent to step 106 of Figure 4).

Having thus established the bit count code tag of the image in question, the user carrying out the audit operation then places the CD ROM into the CD drive port of the PC unit at step 120. Arrow 121 represents manual inputting, into the PC Management Software at step 122, of information which will include the bit count code tag displayed at step 119 and also various tolerance levels so that the software can be instructed to search for not merely a tagged image file on the CD ROM having exactly the same bit count code tag but also bit count code tags which differ by predefined tolerances. This will allow the location of images which may have started out identical to the one under investigation but have possibly been distorted by additional material (for example manuscript notes made on the original).

The PC Management Software will then retrieve image and user information at step 123 and enable this to be printed at step 124 or transferred to a magnetic disc or to a network.

It will be appreciated that the first part (steps 115 to 119) of the process described above with reference to Figure 6 is carried out on the SAD itself, and the remainder (steps 120 to 124) of the process is carried out on the PC used for audit purposes. This ensures that it is not possible for anyone in the field to access the stored information, for example with the malicious intent of corrupting it.

Clearly from the above, it is possible for all use of the protected data handling equipment to be accessed later from archives, given either image-specific information or user-specific information which enables the use either of a particular image or by a particular user to be retrieved for investigation.

## Claims

1. A data security system comprising:- image data handling equipment (1); user identification means (47, 51) for activation in a manner indicative of the unique identity of a pre-authorised user of the equipment; image data receiving means (45) connected to receive the image data of an entire image being handled by the equipment; and data storage means (43) connected to receive the image data from said image data receiving means and user identification data from said user identification means for storing the information in reproducible form, wherein said data storage means include means for deriving an image data characteristic of each image handled by the image data handling equipment, and means for comparing the said image data characteristic of two successive images for identifying repetition of the same image information in two successive cycles, **characterized in that** said image data characteristic is the bit count of the digital image information; and in that means are provided for ensuring storing the image data of the first of said two successive images but not the second of said two successive images where the entire first image and the entire next successive image have said image data characteristics indicative of a repeat of the same image.

2. A data security system according to claim 1, wherein the recognition of repetition of an image between the first image and the next successive image depends on detecting when the bit count of said next successive image does not differ from said bit count of the first image by more than a predetermined tolerance.

3. A data security system according to claim 1, wherein the data storage means are effective to store said image data of said second of the two successive images when the image data characteristic comparison reveals that said second of the successive images is different from said first of the images, and to disregard said second of the successive images when said image comparison step reveals identity of image between said first and said second successive images.

4. A data security system according to any one of claims 1 to 3, and including means for storing said image data characteristic as well as said image data, and in a manner allowing subsequent identification of all stored images having a particular value of said image data characteristic.

5. A data security system according to any one of claims 1 to 3, wherein the digital image data is compressed before storage by said data storage means.

6. A data security system according to any one of claims 1 to 3, wherein said image data is encrypted when stored by said data storage means.

7. A method of preserving security of data, comprising:- recording the identity of the user of image data handling equipment; storing the image data of an entire image processed by said image data handling equipment, in association with the data indicative of the identity of the user; generating an image data characteristic of each image processed by said image data handling equipment; comparing the values of said image data characteristic of any two entire successive images processed by the image data handling equipment; **characterized in that** the image data characteristic is the bit count of the image data to be stored; and in that, upon detecting identity of two successive said entire images being processed, the digital image data of the first said image is stored and the image data of the second said image is disregarded but its said image data characteristic is used for comparison with that of yet a further subsequent image.

8. A method according to claim 7, and including storing the digital image data of each said image in association with both said image data characteristic of that image and the identity of the user of that image, and including the step of accessing the stored data by reference to the image data characteristic, or to the identity of the user, associated with that image.

9. A method according to claim 8, and further including the step of registering and storing the time of processing of each said image, and wherein said image data accessing step includes the possibility of accessing the images by reference to the time of processing.

## Patentansprüche

1. Datensicherungssystem, das folgendes umfaßt:
eine Bilddatenverarbeitungsanlage (1) ; eine Benutzeridentifikationseinrichtung (47, 51), die so zu betätigen ist, daß sie die eindeutige Identität eines bereits autorisierten Benutzers der Anlage anzeigt; eine Bilddatenempfangseinrichtung (45), die so angeschlossen ist, daß sie die Bilddaten eines ganzen, durch die Anlage verarbeiteten Bildes empfängt; und
eine Datenspeichereinrichtung (43), die so angeschlossen ist, daß sie die Bilddaten von der Bilddatenempfangseinrichtung und die Benutzeridentifikationsdaten von der Benutzeridentifikationseinrichtung empfängt, um die Informationen in reproduzierbarer Form zu speichern, wobei die Datenspeichereinrichtung eine Einrichtung zur Ermittlung einer Bilddatencharakteristik jedes durch die Bilddatenverarbeitungsanlage verarbeiteten Bildes umfaßt und eine Einrichtung zum Vergleichen der Bilddatencharakteristik zweier aufeinanderfolgender Bilder, um festzustellen, daß sich dieselbe Bildinformation in zwei aufeinanderfolgenden Zyklen wiederholt, **dadurch gekennzeichnet, daß** die Bilddatencharakteristik die Bitzahl der digitalen Bildinformation ist; und daß Einrichtungen vorgesehen sind, um sicherzustellen, daß die Bilddaten des ersten der beiden aufeinanderfolgenden Bilder aber nicht die des zweiten der beiden aufeinanderfolgenden Bilder gespeichert werden, wobei das ganze erste Bild und das ganze nächstfolgende Bild die Bilddatencharakteristiken aufweisen, die auf eine Wiederholung desselben Bildes hindeuten.

2. Datensicherungssystem nach Anspruch 1, bei dem die Erkennung der Wiederholung eines Bildes zwischen dem ersten Bild und dem nächstfolgenden Bild davon abhängt, ob erfaßt wird, wann sich die Bitzahl des nächstfolgenden Bildes von der Bitzahl des ersten Bildes um nicht mehr als einen vorbestimmten Toleranzwert unterscheidet.

3. Datensicherungssystem nach Anspruch 1, bei dem die Datenspeichereinrichtung die Bilddaten des zweiten der beiden aufeinanderfolgenden Bilder speichern kann, wenn der Vergleich der Bilddatencharakteristik ergibt, daß sich das zweite der aufeinanderfolgenden Bilder von dem ersten unterscheidet, und das zweite der aufeinanderfolgenden Bilder außer Acht lassen können, wenn der Bildvergleich ergibt, daß das erste und das zweite der aufeinanderfolgenden Bilder miteinander identisch sind.

4. Datensicherungssystem nach einem der Ansprüche 1 bis 3 mit einer Einrichtung zum Speichern der Bilddatencharakteristik sowie der Bilddaten, und zwar in einer Weise, die die anschließende Identifikation aller gespeicherten Bilder mit einem bestimmten Wert der Bilddatencharakteristik erlaubt.

5. Datensicherungssystem nach einem der Ansprüche 1 bis 3, bei dem die digitalen Bilddaten komprimiert werden, bevor sie durch die Datenspeichereinrichtung gespeichert werden.

6. Datensicherungssystem nach einem der Ansprüche 1 bis 3, bei dem die Bilddaten verschlüsselt werden, wenn sie durch die Datenspeichereinrichtung gespeichert werden.

7. Verfahren zum Erhalt der Sicherheit von Daten, wobei das Verfahren die folgenden Schritte umfaßt:
Registrieren der Identität des Benutzers einer Bilddatenverarbeitungsanlage; Speichern der Bilddaten eines ganzen durch die Bilddatenverarbeitungsanlage verarbeiteten Bildes in Verbindung mit den Daten, die auf die Identität des Benutzers hinweisen; Erzeugen einer Bilddatencharakteristik von jedem durch die Bilddatenverarbeitungsanlage verarbeiteten Bild; Vergleichen der Werte der Bilddatencharakteristik von jeweils zwei ganzen aufeinanderfolgenden Bildern, die durch die Bilddatenverarbeitungsanlage verarbeitet werden; **dadurch gekennzeichnet, daß** die Bilddatencharakteristik die Bitzahl der zu speichernden Bilddaten ist; und daß nach dem Feststellen der Identität von zwei aufeinanderfolgenden, ganzen verarbeiteten Bilder die digitalen Bilddaten des ersten Bildes gespeichert werden und die Bilddaten des zweiten Bildes außer Acht gelassen werden, seine Bilddatencharakteristik aber zum Vergleich mit der noch eines weiteren darauffolgenden Bildes verwendet wird.

8. Verfahren nach Anspruch 7, bei dem die digitalen Bilddaten jedes Bildes in Verbindung sowohl mit der Bilddatencharakteristik des Bildes als auch mit der Identität des Benutzers dieses Bildes gespeichert werden, und bei dem anhand der zu diesem Bild gehörigen Bilddatencharakteristik oder Identität des Benutzers auf die gespeicherten Daten zugegriffen wird.

9. Verfahren nach Anspruch 8, bei dem ferner die Verarbeitungszeit jedes Bildes registriert und gespeichert wird, und bei dem der Schritt des Zugriffs auf die Bilddaten auch die Möglichkeit des Zugriffs auf die Bilder anhand der Verarbeitungszeit umfaßt.

## Revendications

1. Système de sécurisation de données comprenant : un équipement de traitement de données d'image (1) ; des moyens d'identification d'utilisateur (47, 51) pour l'activation d'une façon indicative de l'identité unique d'un utilisateur pré-autorisé de l'équipement ; des moyens de réception de données d'image (45) connectés de façon à recevoir les données d'image d'une image entière traitée par l'équipement ; et des moyens de mémorisation dé données (43) connectés pour recevoir les données d'image desdits moyens de réception de données d'image et les données d'identification d'utilisateur desdits moyens d'identification d'utilisateur pour mémoriser l'information sous forme reproductible, dans lequel lesdits moyens de mémorisation de données comprennent des moyens pour dériver une caractéristique de données d'image de chaque image traitée par l'équipement de traitement de données d'image, et des moyens pour comparer ladite caractéristique de données d'image de deux images successives pour identifier la répétition de la même information d'image lors de deux cycles successifs, **caractérisé en ce que** ladite caractéristique de données d'image est le comptage de bits de l'information d'image numérique ; et en ce que des moyens sont présents pour assurer la mémorisation des données d'image de la première desdites deux images successives mais non de la deuxième desdites deux images successives, la première image entière et l'image entière suivante ayant lesdites caractéristiques de données d'image indicatives d'une répétition de la même image.

2. Système de sécurisation de données selon la revendication 1, dans lequel la reconnaissance de répétition d'une image entre la première image et l'image suivante dépend de la détection du moment où le comptage de bits de ladite image suivante ne diffère pas dudit comptage de bits de la première image davantage que d'une tolérance prédéterminée.

3. Système de sécurisation de données selon la revendication 1, dans lequel les moyens de mémorisation de données sont efficaces pour mémoriser lesdites donnés d'image de ladite deuxième des deux images successives lorsque la comparaison de caractéristiques de données d'image révèle que ladite deuxième des images successives est différente de ladite première des images, et pour rejeter ladite deuxième des images successives lorsque ladite étape de comparaison d'images révèle une identité d'image entre ladite première et ladite deuxième images successives.

4. Système de sécurisation de données selon l'une quelconque que revendications 1 à 3, et comprenant des moyens pour mémoriser ladite caractéristique de données d'image ainsi que lesdites données d'image, et d'une façon permettant une identification ultérieure de toutes les images mémorisées ayant une valeur particulière de ladite caractéristique de données d'image.

5. Système de sécurisation de données selon l'une quelconque des revendications 1 à 3, dans lequel les données d'image numériques sont comprimées avant la mémorisation par lesdits moyens de mémorisation de données.

6. Système de sécurisation de données selon l'une quelconque des revendications 1 à 3, dans lequel lesdites données d'image sont cryptées lorsqu'elles sont mémorisées par lesdits moyens de mémorisation de données.

7. Procédé pour préserver la sécurité de données comprenant : l'enregistrement de l'identité de l'utilisateur de l'équipement de traitement de données d'image ; la mémorisation des données d'image d'une image entière traitée par ledit équipement de traitement de données d'image, en association avec les données indicatives de l'identité de l'utilisateur ; la génération d'une caractéristique de données d'image de chaque image traitée par ledit équipement de traitement de données d'image ; la comparaison des valeurs de ladite caractéristique de données d'image de n'importe lesquelles de deux images entières successives traitées par l'équipement de traitement de données d'image ; **caractérisé en ce que** la caractéristique de données d'image est le comptage de bits des données d'image devant être mémorisées ; et en ce que, lors de la détection de l'identité de deux images successives desdites images entières qui sont traitées, les données d'image numériques de ladite première image sont mémorisées et les données d'image de ladite deuxième image sont rejetées, mais ladite caractéristique de données d'image de celle-ci est utilisée pour la comparaison avec celle d'encore une autre image suivante.

8. Procédé selon la revendication 7, et comprenant la mémorisation des données d'image numériques de chacune desdites images en association avec chacune de ladite caractéristique de données d'image de cette image et de l'identité de l'utilisateur de cette image, et comprenant l'étape d'accès aux données mémorisées en référence à la caractéristique de données d'image, ou à l'identité de l'utilisateur, associée à cette image.

9. Procédé selon la revendication 8, et comprenant de plus l'étape d'enregistrement et de mémorisation du temps de traitement de chacune desdites images, et dans lequel ladite étape d'accession aux données d'image comprend la possibilité d'accéder aux images par référence au temps de traitement.
